# EUROPÄISCHE PATENTSCHRIFT

(11) **EP 0 787 627 B1**
(45) Veröffentlichungstag und Bekanntmachung des Hinweises auf die Patenterteilung: **15.03.2000**
(21) Anmeldenummer: 96120637.2
(22) Anmeldetag: 20.12.1996
(51) Int. Cl.: B60R 21/06

(54) **Kraftfahrzeug mit wenigstens einem Schutzrollo**
Motor vehicle with at least one protective roller blind
Véhicule automobile avec au moins un rouleau de protection

(30) Priorität: 01.02.1996 DE 19603534
(43) Veröffentlichungstag der Anmeldung: 06.08.1997
(73) Patentinhaber: Bayerische Motoren Werke Aktiengesellschaft, 80788 München (DE)
(72) Erfinder: Karl, Horst, 85774 Unterföhring (DE)

(56) Entgegenhaltungen:
- EP-A- 0 258 823
- DE-A- 4 128 702
- DE-U- 29 518 982
- FR-A- 2 699 875
- GB-A- 2 135 639

## Beschreibung

Die Erfindung bezieht sich auf ein Kraftfahrzeug mit wenigstens einem Schutzrollo der im Oberbegriff des Patentanspruchs 1 genannten und aus der FR 2 699 875 A hervorgehenden Art.

Die aus dieser Druckschrift bekannte, netzartige Rollobahn ist an einem Endbereich an einer sich in Fahrzeugquerrichtung erstreckenden Lagerwelle befestigt, die an ihren beiden Endabschnitten jeweils in einem an den beiden Seitenrändem der Dachaußenhaut sowie unterhalb dieser vorgesehenen Aufnahmelager drehbar gelagert ist. Dabei befindet sich an einem Endabschnitt der Lagerwelle eine Spiralfeder, gegen deren Wirkung die netzartige Rollobahn unter Durchsetzung eines in der Dachinnenverkleidung ausgebildeten Durchtrittsschlitzes von der Lagerwelle abgewickelt und hinter den Rückenlehnen der beiden Vordersitze nahe des Fahrzeugbodens eingehängt wird. Nach Aushängen der Rollobahn wird diese durch die Wirkung der vorgespannten Spiralfeder auf die Lagerwelle aufgewickelt. Die bekannte Rollobahn kann somit nur in einer einzigen, etwa lotrecht verlaufenden Gebrauchslage verwendet werden.

Ferner geht aus der DE 41 28 702 A1 ein Kombifahrzeug hervor, dessen Rücksitze im Bereich der Lehnenunterkante eine querverlaufende Trägerrolle mit einer auf-und abwickelbaren Rollobahn haben. Diese verläuft in abgewickeltem Zustand bei etwa senkrecht oder umgeklappter, etwa waagrecht verlaufender Rückenlehne der Rücksitze über eine an der Lehnenoberkante vorgesehene Umlenkrolle. Schließlich wird die Rollobahn in eine am Fahrzeugdach vorgesehene Aufnahmeeinrichtung eingehängt. Das Hochziehen der Rollobahn - zumal gegen die Wirkung eines Federelements - ist jedoch umständlich und auch anstrengend. Darüber hinaus beansprucht auch die an der Lehnenunterkante vorgesehene Trägerrolle einen verhältnismäßig großen Einbauraum.

Aufgabe der Erfindung ist es daher, ein Schutzrollo der im Oberbegriff des Patentanspruchs 1 genannten Art derart anzuordnen und so auszubilden, daß die Rollobahn in mehreren unterschiedlichen Gebrauchslagen verwendet werden kann.

Zur Lösung der Aufgabe sind die im Patentanspruch 1 dargelegten Merkmale vorgesehen.

Nachdem die Dachinnenverkleidung zwei, im Abstand voneinander liegende, querverlaufende Durchtrittsschlitze zum Durchführen der Rollobahn aufweist, ist das Schutzrollo vorteilhafterweise unsichtbar untergebracht und kann bedarfsweise auch unkompliziert nachgerüstet werden. Dabei ist auch durch den S-förmigen Verlauf der Rollobahn die Voraussetzung dafür geschaffen, daß die Rollobahn über zwei Umlenkelemente in zwei unterschiedlichen Gebrauchslagen, nämlich zur Fahrzeugfrontseite und zur Fahrzeugheckseite hin abwärts verlagert werden kann. Von den beiden Umlenkelementen ist eines starr angebracht, während das bewegliche Umlenkelement längs den seitlichen Dachrahmen formschlüssig und damit absolut zuverlässig verlagert wird.

Die beiden Umlenkelemente weisen jeweils eine gekrümmte Lagerwelle auf. Damit die bewegliche Lagerwelle bei Längsverlagerungen nicht umkippen kann, hat sie an mindestens einem Endbereich eine Abflachung, an der das untere freie Ende des C-förmigen Querschnittsprofils der sich am Dachrahmen befindenden Führungsbahn anliegt. Ferner sind auf den Lagerwellen der Umlenkelemente jeweils eine Anzahl von Kunststoffwalzen drehbar gelagert, durch die gewährleistet ist, daß die Rollobahn leichtgängig abwärts verlagert werden kann (Merkmale der Patentansprüche 2 bis 6).

Durch die an den beiden Enden der Rollobahn vorgesehenen und über diese seitlich hinausragenden Querstangen ist gewährleistet, daß das Schutzrollo Aufbewahrungslage federbelastet an der Dachinnenverkleidung anliegt und somit griffgünstig erfaßt werden kann (Merkmale des Patentanspruchs 7). Schließlich hat die Rollobahn des Schutzrollos eine solche Längserstreckung, daß ihr frontseitiger, abwärtsverlagerter Endabschnitt im Bereich zwischen den Vorder- und Rücksitzen liegt, während der heckseitige Endabschnitt der Rollobahn sich im Bereich der Rückenlehne der Rücksitze befindet (Merkmale des Patentanspruchs 8).

Ein Ausführungsbeispiel der Erfindung ist in der Zeichnung dargelegt und wird im folgenden erläutert. Es zeigt:
- Figur 1: ein Kombifahrzeug in einem Längsschnitt mit sich in Aufbewahrungslage befindenden Schutzrollo,
- Figur 2 und 3: der sich in Wirkstellung befindende, der Fahrzeugfrontseite zugewandte Endabschnitt der Rollobahn, der an der nach vorne geschwenkten Rückenlehne des Rücksitzes bzw. an dessen Sitzteil festgelegt ist,
- Figur 4 und 5: der der Fahrzeugheckseite zugewandte Endabschnitt der Rollobahn in Wirkstellung, der im Bereich der Rückenlehne des Rücksitzes bzw. am Boden des Laderaums festgelegt ist,
- Figur 6: einen Querschnitt des Fahrzeugdaches im Bereich des längsverlagerbaren Umlenkelements mit sich in Aufbewahrungslage befindendem Schutzrollo,
- Figur 7: einen Schnitt der längs der Linie VII-VII in Figur 6 in größerer Darstellung.

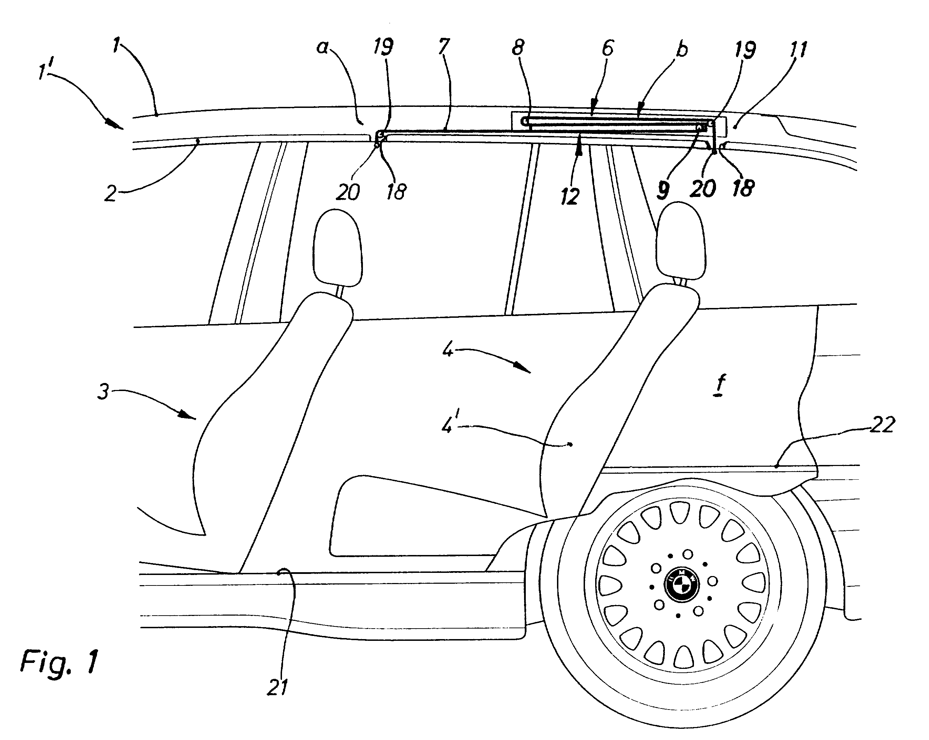

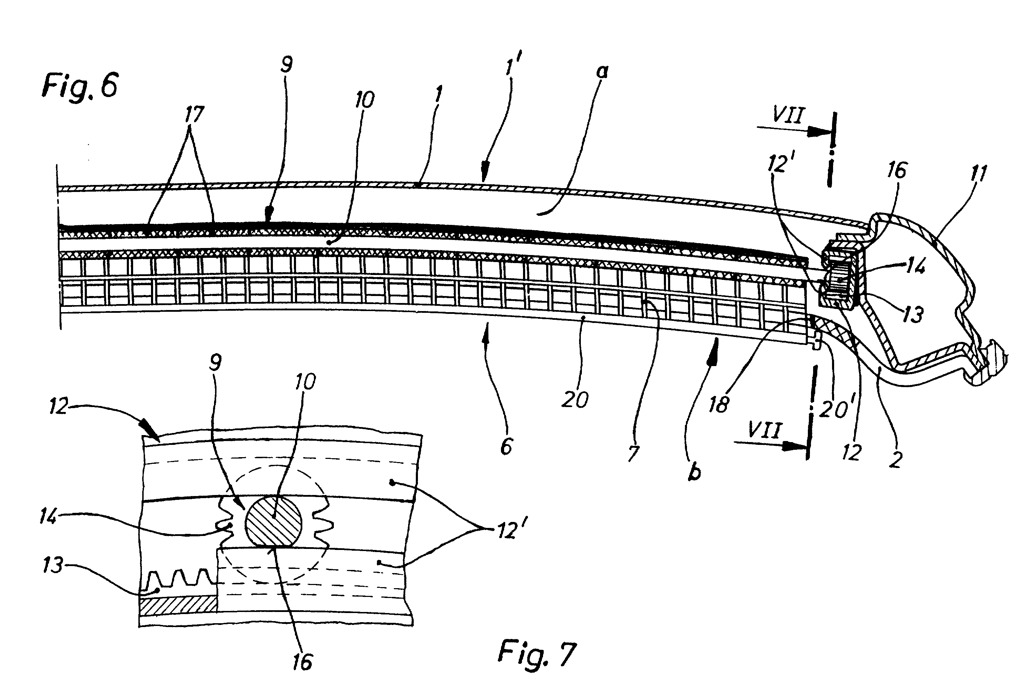

Das in Figur 1 dargestellte Kombifahrzeug hat eine Dachaußenhaut 1 und eine Dachinnenverkleidung 2, zwischen denen ein Zwischenraum a liegt. In diesem ist im Bereich zweier Vordersitze 3 und zweier Rücksitze 4 ein Schutzrollo 6 angeordnet, dessen einstückige, netzartige Rollobahn 7 S-förmig verlaufend angeordnet ist. Hierfür ist die Rollobahn 7 über zwei, sich in Fahrzeugquerrichtung erstreckende Umlenkelemente 8 und 9 geführt. Die beiden Umlenkelemente 8 und 9 weisen jeweils eine Lagerwelle 10 auf, die - wie Figur 6 zeigt - entsprechend der in Fahrzeugquerrichtung verlaufenden Krümmung der Dachaußenhaut 1 gebogen verläuft. Dabei ist die Lagerwelle 10 des ersten, der Fahrzeugfrontseite zugewandten Umlenkelements 8 starr an den beiden gegenüberliegenden, in Fahrzeuglängsrichtung verlaufenden Dachrahmen 11 angebracht.

Wie die Figuren 6 und 7 zeigen, ist dagegen das zweite, der Fahrzeugheckseite zugewandte Umlenkelement 9 an den beiden gegenüberliegenden Dachrahmen 11 längsverschiebbar vorgesehen. Hierfür ist an den Dachrahmen 11 jeweils eine in Fahrzeuglängsrichtung vom Bereich des starren Umlenkelements 8 bis in den Bereich des heckseitigen Führungsstabs 19 verlaufende Führungsbahn 12 angebracht, die ein C-förmiges Querschnittsprofil aufweist. An dessen untenliegendem Schenkel ist eine bandförmige sowie aus Kunststoff bestehende Zahnstange 13 durch Kleben oder dergleichen befestigt. Dabei greift in das Zahnprofil der Zahnstange 13 ein an den beiden Endabschnitten der Lagerwelle 10 des Umlenkelements 9 drehbar gelagertes Zahnrad 14 ein. Damit bei dem im folgenden erläuterten Längsverlagern des Umlenkelements 9 die in Fahrzeugquerrichtung gekrümmte Lagerwelle 10 nicht umkippen kann, weist diese an ihren beiden Endbereichen eine Abflachung 16 auf, wie Figur 7 zeigt. An der Abflachung 16 sowie am gegenüberliegenden Umfangsbereich der Lagerwelle 10 liegen die freien, einander zugewandten Abschnitte 12' der Führungsbahn 12 an. Nach einem nicht dargestellten Ausführungsbeispiel kann an der Lagerwelle 10 auch ein Winkelabschnitt mit kreisförmigem Querschnitt befestigt sein, an dessen parallel zur Lagerwelle 10 verlaufendem Endabschnitt eine Führungsrolle drehbar gelagert ist. Diese hat etwa den gleichen Durchmesser wie das Zahnrad 14.

Damit die Rollobahn 7 beim im folgenden erläuterten Längsverlagern mit verhältnismäßig geringem Kraftaufwand über die Umlenkelemente 8 und 9 gezogen werden kann, sind auf deren Lagerwellen 10 nebeneinanderliegend eine Anzahl von aus Kunststoff bestehenden Walzen 17 drehbar gelagert; diese haben eine Länge von etwa 100 mm.

In den Figuren 1 bis 6 ist ferner zu ersehen, daß die Dachinnenverkleidung 2 im Bereich der Vordersitze 3 und der Rücksitze 4 jeweils einen in Fahrzeugquerrichtung verlaufenden Durchtrittsschlitz 18 aufweist, durch die jeweils ein Endabschnitt der Rollobahn 7 geführt ist. Dabei ist im Bereich eines jeden Durchtrittsschlitzes 18 ein quer zu den Dachrahmen 11 verlaufender und an diesen befestigter Führungsstab 19 vorgesehen, über den jeweils ein Endabschnitt der Rollobahn 7 geführt wird. Schließlich ist an den beiden Enden der Rollobahn 7 eine Querstange 20 angebracht, deren seitlich über die Rollobahn 7 hinausragende Endabschnitte 20' in Aufbewahrungslage b des Schutzrollos 6 federbelastet an der Dachinnenverkleidung 2 anliegen. Hierzu ist in dem längsverlagerbaren Umlenkelement 9 eine nicht dargestellte Torsionsfeder - oder dergleichen Federelement -vorgesehen, durch deren Wirkung die Querstange 20 der Rollobahn 7 in Aufbewahrungslage b des Schutzrollos 6 gegen die Dachinnenverkleidung 2 gezogen wird.

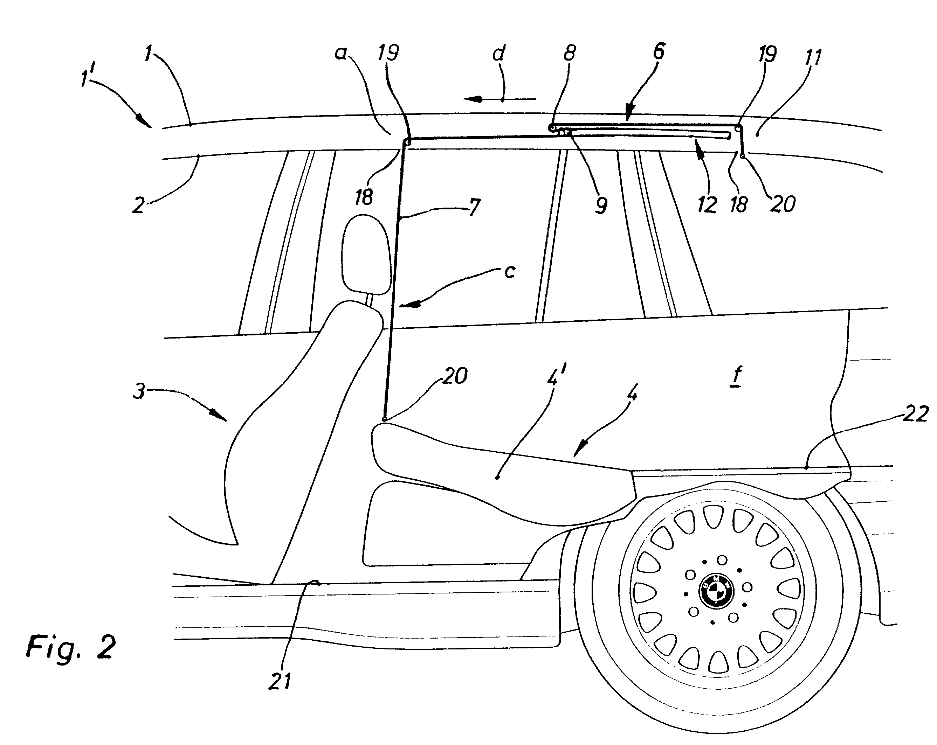

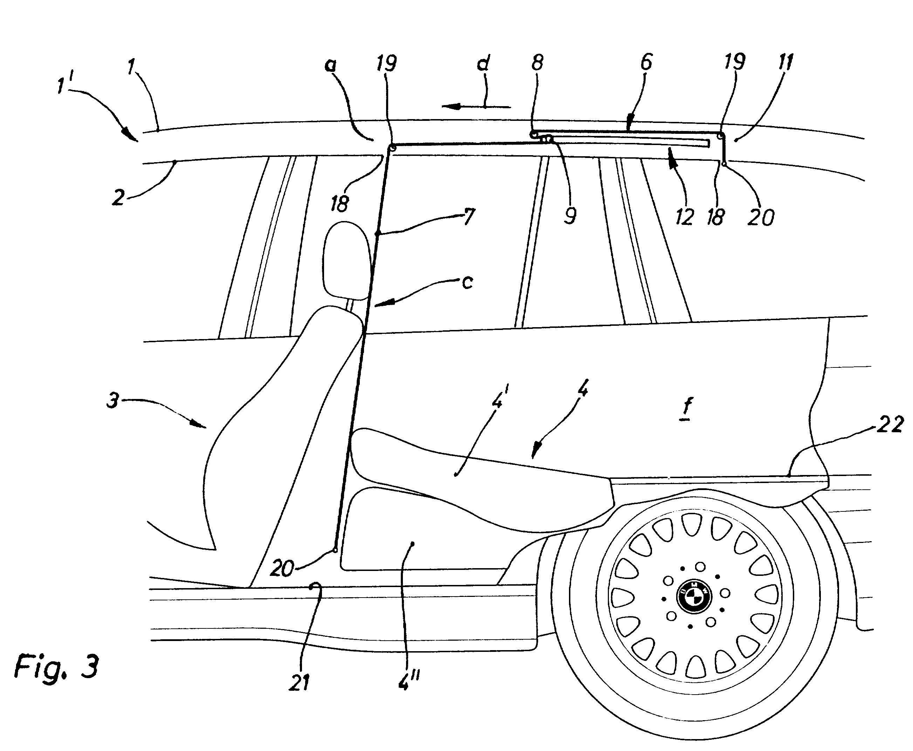

In den Figuren 2 bis 5 ist die Rollobahn 7 des Schutzrollos 6 in Wirkstellung c dargestellt. Wie die Figuren 2 und 3 zeigen, ist die Rückenlehne 4' der Rücksitze 4 nach vorne geschwenkt und damit der Laderaum f des Kombifahrzeugs gegenüber etwa lotrecht verlaufenden Rückenlehnen 4' der Rücksitze 4 (Figur 1) vergrößert. Damit ein im Laderaum f vorhandenes Ladegut bei einer starken Fahrzeugverzögerung oder dergleichen nicht in den Bereich der Vordersitze 3 geschleudert wird, wird nunmehr die Rollobahn 7 über die Querstange 20 und gegen die Wirkung der Torsionsfeder im Umlenkelement 9 nach unten gezogen; schließlich wird die Querstange 20 an der Rückenlehne 4' (Figur 2) oder am Sitzteil 4" (Figur 3) der Rücksitze 4 oder am Fahrzeugboden 21 befestigt. Dabei wird der sich im Bereich des Zwischenraums a zwischen der Dachaußenhaut 1 und der Dachinnenverkleidung 2 befindende Abschnitt der Rollobahn 7 in Pfeilrichtung d verlagert. Bei diesem Vorgang wird das Umlenkelement 9 von der in Figur 1 dargestellten Ruhelage in Pfeilrichtung d in die in den Figuren 2 und 3 dargestellte Endlage gezogen, wobei die an der Lagerwelle 10 des Umlenkelements 9 drehbar gelagerten Zahnräder 14 mit den Zahnstangen 13 in den Führungsbahnen 12 kämmen, so daß das Umlenkelement 9 zuverlässig in die jeweilige Endlage längsverlagert werden kann. Wie erwähnt, ist das Umlenkelement 8 starr angebracht. Nach Lösen des ausgezogenen Endabschnitts der Rollobahn 7 vom jeweiligen Teil wird diese durch Federwirkung in die in Figur 1 dargestellte Aufbewahrungslage b zurückverlagert.

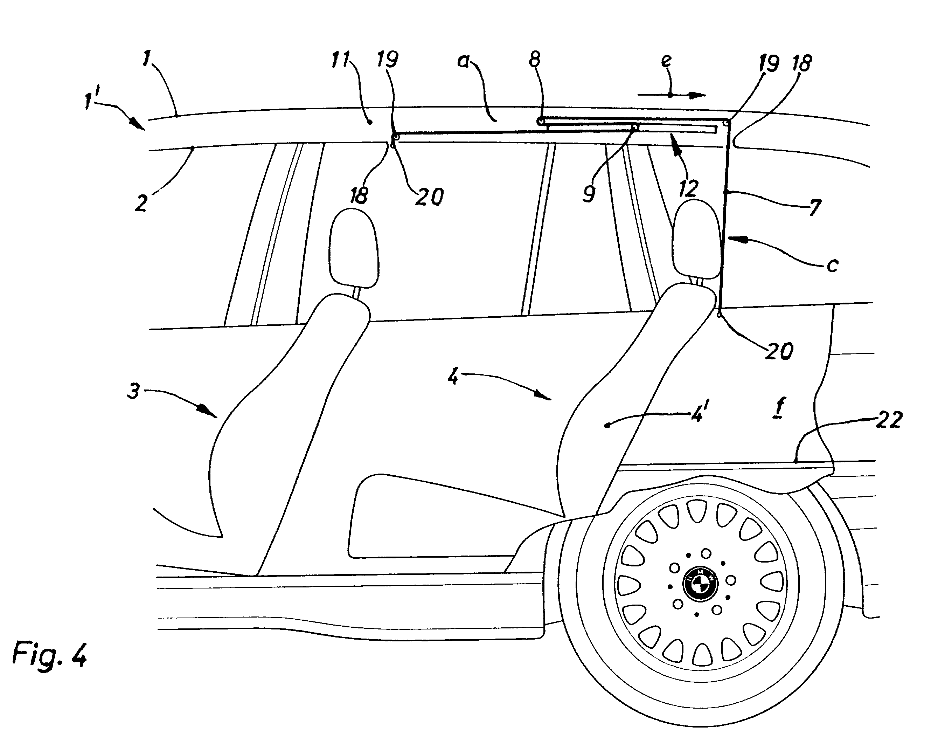

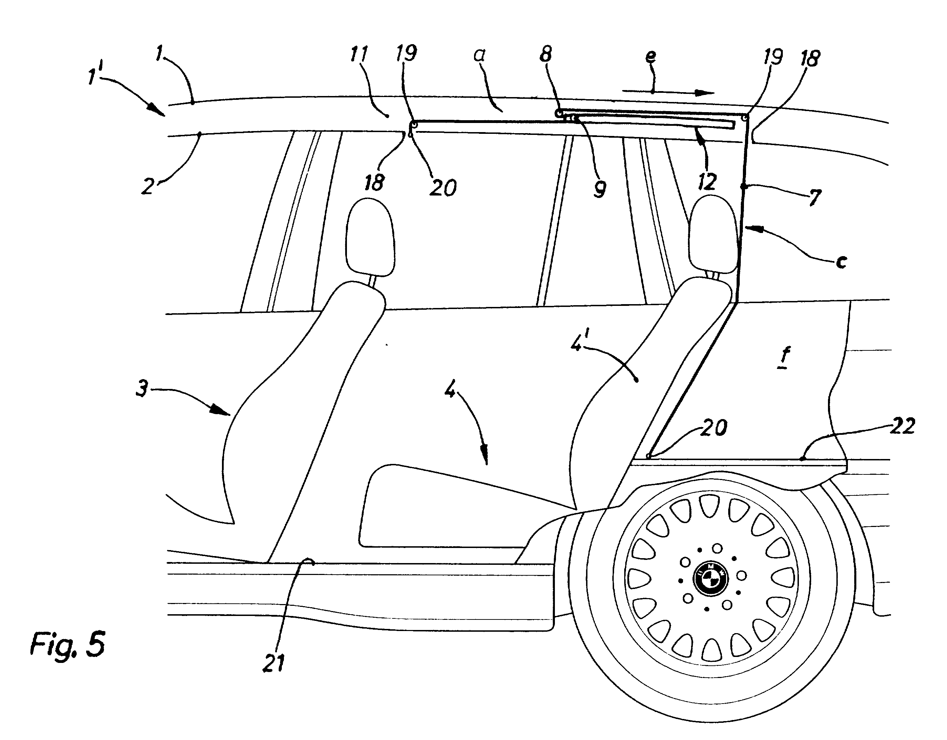

Schließlich ist auch der heckseitige Endabschnitt der Rollobahn 7 von der in Figur 1 dargestellten Aufbewahrungslage b in die in den Figuren 4 und 5 dargestellte Wirkstellung c verlagerbar. Dabei wird beim Abwärtsziehen der Querstange 20 die Rollobahn 7 in Pfeilrichtung e längsverlagert, wobei sie um das starre Umlenkelement 8 gezogen wird, während dabei das Umlenkelement 9 in den Führungsbahnen 12 längsverlagert wird; dabei kämmen die Zahnräder 14 der Lagerwelle 10 mit den Zahnstangen 13. Schließlich wird die gegen die Wirkung der Torsionsfeder im Umlenkelement 9 ausgezogene Rollobahn 7 mit der Querstange 20 an der Rückenlehne 4' der Rücksitze 4 oder an den Fahrzeugseitenwänden oder am Boden 22 des Laderaums f lösbar befestigt. Nach Lösen der Querstange 20 vom jeweiligen Teil wird die Rollobahn 7 durch Federwirkung in die in Figur 1 dargestellte Aufbewahrungslage b zurückverlagert.

## Patentansprüche

1. Kraftfahrzeug mit wenigstens einem Schutzrollo (6), dessen Rollobahn (7) aus einer Aufbewahrungslage (b) in eine zumindest angenähert lotrecht verlaufende Wirkstellung (c) verlagerbar ist, wobei sich das Schutzrollo (6) in Aufbewahrungslage (b) zwischen einer Dachaußenhaut (1) und einer Dachinnenverkleidung (2) befindet und durch mindestens einen in dieser vorgesehenen Durchtrittsschlitz (18) geführt ist, dadurch gekennzeichnet, daß
- die Dachinnenverkleidung (2) zwei, im Abstand voneinander liegende, sich in Fahrzeugquerrichtung erstreckende Durchtrittsschlitze (18) aufweist, durch welche die einstückige Rollobahn (7) des Schutzrollos (6) geführt ist,
- die Rollobahn (7) in dem zwischen der Dachaußenhaut (1) und der Dachinnenverkleidung (2) liegenden Zwischenraum (a) S-förmig verlaufend angeordnet ist, wobei sie über zwei, sich in Fahrzeugquerrichtung erstreckende Umlenkelemente (8 und 9) geführt ist, von denen
- das erste, der Fahrzeugfrontseite zugewandte Umlenkelement (8) starr angebracht ist, während das zweite, der Fahrzeugheckseite zugewandte Umlenkelement (9) in an den gegenüberliegenden Dachrahmen (11) vorgesehenen, in Fahrzeuglängsrichtung verlaufenden Führungsbahnen (12) längsverschiebbar geführt ist.

2. Kraftfahrzeug nach Anspruch 1, dadurch gekennzeichnet, daß die beiden Umlenkelemente (8 und 9) jeweils zumindest aus einer Lagerwelle (10) bestehen, die etwa entsprechend der in Fahrzeugquerrichtung verlaufenden Krümmung der Dachaußenhaut (1) gebogen ist.

3. Kraftfahrzeug nach Anspruch 1, dadurch gekennzeichnet, daß die beiden, ein C-förmiges Querschnittsprofil aufweisenden Führungsbahnen (12) jeweils mit einer sich am untenliegenden Schenkel befindenden Zahnstange (13) versehen sind, mit der das an jedem Endabschnitt der Lagerwelle (10) des Umlenkelements (9) drehbar gelagerte Zahnrad (14) in Eingriff steht.

4. Kraftfahrzeug nach Anspruch 1, dadurch gekennzeichnet, daß an der Lagerwelle (10) des Umlenkelements (9) in axialem Abstand zum Zahnrad (14) eine Führungsrolle vorgesehen ist, deren Durchmesser etwa dem Durchmesser des Zahnrads entspricht.

5. Kraftfahrzeug nach Anspruch 3, dadurch gekennzeichnet, daß die Lagerwelle (10) zumindest an einem Endbereich wenigstens eine Abflachung (16) aufweist, wobei mit dieser und mit dem gegenüberliegenden Umfangsbereich der Lagerwelle die einander zugewandten Abschnitte (12') des C-förmigen Querschnittsprofils der Führungsbahn (12) zusammenwirken.

6. Kraftfahrzeug nach Anspruch 2, dadurch gekennzeichnet, daß auf den Lagerwellen (10) der Umlenkelemente (8 und 9) eine Anzahl von Walzen (17) drehbar gelagert sind.

7. Kraftfahrzeug nach Anspruch 1, dadurch gekennzeichnet, daß die beiden Enden der Rollobahn (7) des Schutzrollos (6) jeweils mit einer Querstange (20) versehen sind, deren seitlich über die Rollobahn hinausragenden Endabschnitte (20') in Aufbewahrungslage (b) des Schutzrollos federbelastet an der Dachinnenverkleidung (2) anliegen.

8. Kraftfahrzeug nach Anspruch 1, dadurch gekennzeichnet, daß die Rollobahn (7) des Schutzrollos (6) eine solche Längserstreckung hat, daß beim Verlagern aus der Aufbewahrungslage (b) in eine Wirkstellung (c) ihr frontseitiger Endabschnitt an der nach vorne geschwenkten Rückenlehne (4') der Rücksitze (4), an deren Sitzteil (4") oder am Fahrzeugboden (21) festlegbar ist, während der heckseitige Endabschnitt der Rollobahn (7) an der etwa lotrecht verlaufenden Rückenlehne der Rücksitze, an den Fahrzeugseitenwänden oder am Boden (22) des Laderaums (f) befestigt wird.

## Claims

1. A motor vehicle comprising at least one protective window blind (6) having a web (7) movable from a storage position (b) into an at least approximately vertical operative position (c), wherein the web (6) when in the storage position (b) is between a roof shell (1) and a roof lining (2) and is guided through at least one slot (18) provided in the said roof lining, characterised in that
- the roof lining (2) has two spaced-apart slots (18) extending in the transverse direction of the vehicle and through which the one-piece web (7) of the blind (6) is guided,
- the web (7) is disposed in an S shape in the space (a) between the roof shell (1) and the roof lining (2), and is guided by two guide elements (8 and 9) extending in the transverse direction of the vehicle, of which
- the first guide element (8), which faces the front of the vehicle, is rigidly fastened whereas the second guide element (9), which faces the back of the vehicle, is guided for longitudinal movement in guide tracks (12) provided in the facing roof frame (11) and extending in the longitudinal direction of the vehicle.

2. A motor vehicle according to claim 1, characterised in that the two guide elements (8 and 9) each comprise at least one bearing shaft (10) which is bent so as to correspond approximately to the curvature of the roof shell (1) extending in the transverse direction of the vehicle.

3. A motor vehicle according to claim 1, characterised in that the two guide tracks (12), which have a C-shaped cross-sectional profile, are each provided with a rack (13) on their lower limb and in engagement with a toothed wheel (14) mounted for rotation on each end portion of the bearing shaft (10) of the guide element (9).

4. A motor vehicle according to claim 1, characterised in that a guide pulley having a diameter approximately equal to the diameter of the toothed wheel is provided on the bearing shaft (10) of the guide element (9) at an axial distance from the toothed wheel (14).

5. A motor vehicle according to claim 3, characterised in that the bearing shaft (10) at least at one end region has an at least one flat part (16), and the facing portions (12') of the C-shaped cross-sectional profile of the guide track (12) co-operate with the said flat part and with the facing peripheral region of the bearing shaft.

6. A motor vehicle according to claim 2, characterised in that a number of rollers (17) are rotatably mounted on the bearing shafts (10) of the guide elements (8 and 9).

7. A motor vehicle according to claim 1, characterised in that the two ends of the web (7) of the blind (6) are each provided with a transverse rod (20) having end portions (20') which project laterally beyond the web and are biased by a spring against the roof lining (2) when the blind is in the storage position (b).

8. A motor vehicle according to claim 1, characterised in that the web (7) of the blind (6) has a longitudinal extension such that when moved from the storage position (b) into an operative position (c) its end portion at the front can be fastened to the forwardly swung back (4') of the back seat (4), to the seat part (4") thereof or to the floor (21) of the vehicle, whereas the end portion of the web (7) at the rear is fastened to the approximately vertical back of the back seats, to the side walls of the vehicle or to the floor (22) of the luggage compartment (f).

## Revendications

1. Véhicule avec au moins un rouleau de protection (6) dont la bande de rouleau (7) est déplaçable depuis une position de rangement (b) en une position active (c) s'étendant à peu près verticalement, le rouleau de protection (6) se trouvant, dans la position de rangement (b), entre un panneau extérieur de toit (1) et un habillage intérieur de toit (3) et étant guidé à travers au moins une fente de passage (18) prévue dans celui-ci,
caractérisé en ce que
- l'habillage intérieur de toit (2) présente des fentes de passage (18) placées à une distance l'une de l'autre, s'étendant dans la direction transversale du véhicule, fentes à travers lesquelles, la bande de rouleau (7), réalisée d'une seule pièce, du rouleau de protection (6) est guidée,
- la bande de rouleau (7) est disposée dans l'espace intermédiaire (a) situé entre le panneau extérieur de toit (1) et l'habillage intérieur de toit (2), en prenant une forme de S, étant guidée par deux éléments de renvoi (8 et 9) qui s'étendent dans la direction transversale du véhicule, dont
- le premier élément de renvoi (8), tourné vers l'avant du véhicule, est monté rigidement, tandis que le deuxième élément de renvoi (9), tourné vers l'arrière du véhicule, est guidé, déplaçable longitudinalement, dans des pistes de guidage (12) prévues sur le cadre de toit (11) opposé et s'étendant dans la direction longitudinale du véhicule.

2. Véhicule selon la revendication 1,
caractérisé en ce que
les deux éléments de renvoi (8 et 9) sont chacun constitués au moins d'un arbre de palier (10) coudé de manière correspondant à peu près à la courbure, s'étendant dans la direction transversale du véhicule, du panneau extérieur de toit (1) .

3. Véhicule automobile selon la revendication 1,
caractérisé en ce que
les deux pistes de guidage (12), présentant un profil de section transversale en forme de C, sont chacune dotées d'une crémaillère (13) se trouvant sur la branche inférieure, crémaillère avec laquelle s'engrène la roue dentée (14) montée tournante sur chaque tronçon d'extrémité de l'arbre de palier (10) de l'élément de renvoi (9).

4. Véhicule automobile selon la revendication 1,
caractérisé en ce qu'
un rouleau de guidage, dont le diamètre correspond à peu près au diamètre de la roue dentée, est prévu sur l'arbre de palier (10) de l'élément de renvoi (9), à distance axiale de la roue dentée (14).

5. Véhicule automobile selon la revendication 3,
caractérisé en ce que
l'arbre de palier (10) présente, au moins sur une zone d'extrémité, au moins un aplatissement ou méplat (16), les tronçons (12'), tournés l'un vers l'autre, du profil de section transversale en forme de C de la piste de guidage (12) coopérant avec cet aplatissement et avec la zone périphérique opposée de l'arbre de palier.

6. Véhicule automobile selon la revendication 2,
caractérisé en ce qu'
plusieurs rouleaux (17) sont montés à rotation sur les arbres de palier (10) des éléments de renvoi (8 et 9).

7. Véhicule automobile selon la revendication 1,
caractérisé en ce que
les deux extrémités de la bande de rouleau (7) du rouleau de protection (6) sont chacune dotées d'une barre transversale (20), dont des tronçons d'extrémité (20'), sortant latéralement sur la bande de rouleau, appuient, sous la charge d'un ressort, sur l'habillage intérieur de toit (2) lorsque le rouleau de protection est en position de rangement (b).

8. Véhicule automobile selon la revendication 1,
caractérisé en ce que
la bande de rouleau (7) du rouleau de protection (6) a une étendue en longueur telle que, en cas de déplacement depuis la position de rangement (b) dans une position active (c), son tronçon d'extrémité avant peut être fixé sur le dossier (4'), pivoté vers l'avant, du siège arrière (4), sur sa partie d'assise (4") ou sur le plancher (21) du véhicule, tandis que le tronçon d'extrémité arrière de la bande de rouleau (7) est fixé sur le dossier s'étendant à peu près verticalement des sièges arrières, sur les parois latérales du véhicule, ou au plancher (22) de l'espace de chargement (f).
